# DEMANDE DE BREVET EUROPEEN

(11) **EP 2 975 472 A1**
(43) Date de publication de la demande: **20.01.2016**
(21) Numéro de dépôt: 14176984.4
(22) Date de dépôt: 15.07.2014
(51) Int. Cl.: G04G 21/02, G01J 5/08

(54) **Dispositif portable incorporant un dispositif de mesure de la température ambiante**

(71) Demandeur: The Swatch Group Research and Development Ltd., 2074 Marin (CH)
(72) Inventeur: Germiquet, Christophe, 2515 Prêles (CH); Hoover, David, 1315 La Sarraz (CH)
(74) Mandataire: Surmely, Gérard

(57) **Abrégé**

Le dispositif portable (2) incorpore un dispositif de mesure de la température ambiante qui comprend un capteur infrarouge (18). Dans un mode de mesure de la température ambiante, un circuit de commande (30) active plusieurs fois le capteur infrarouge, pour qu'il puisse fournir une pluralité de signaux de mesure au cours d'une certaine période de temps. Ensuite, un circuit de traitement (30) des signaux de mesure est agencé de manière à fournir des valeurs de température correspondant à au moins une partie des signaux de mesure et à effectuer une moyenne avec au moins une partie de ces valeurs de température pour obtenir une valeur de température moyenne qui est considérée comme représentative de la température ambiante. L'invention concerne également une méthode de mesure de la température ambiante pouvant être mise en oeuvre au moyen de ce dispositif portable.

## Description

### Domaine technique

La présente invention concerne le domaine des dispositifs portables incorporant un dispositif de mesure de température, nommé aussi thermomètre, agencé pour mesurer la température ambiante. En particulier, l'invention concerne des dispositifs portables à un poignet d'un utilisateur, par exemple une montre-bracelet équipée d'un tel thermomètre.

### Arrière-plan technologique

Plusieurs dispositifs portables, en particulier des montres-bracelets, équipés d'un thermomètre ont été proposés, étant donné que l'indication de la température ambiante est une information utile appréciée de plusieurs utilisateurs. De manière générale, les capteurs de température utilisés sont du type résistif ou formés par un thermocouple. De tels capteurs donnent la température de leur environnement direct. En particulier pour une montre-bracelet, c'est la température régnant dans le boîtier de montre qui est mesurée lorsque le thermomètre est agencé dans ce boîtier. Or le corps humain est une source d'énergie qui influence généralement fortement la température à l'intérieur du boîtier lorsque la montre-bracelet est portée au poignet. Ainsi, il est difficile voire impossible de mesurer précisément la température ambiante lorsque la montre-bracelet est portée au poignet. En effet, il faut l'enlever et la poser sur un support non chauffant, puis attendre une période de temps relativement longue pour que la température de la montre soit proche de la température ambiante, et finalement effectuer une mesure de la température ambiante. Cette situation engendre un grand inconvénient pour l'utilisateur ; ce qui rend la fonction de mesure de cette température peu attrayante dans un objet portable, notamment dans une montre. Certaines réalisations cherchent à éloigner le capteur au maximum du poignet et/ou à l'isoler thermiquement des parties en contact direct avec le corps humain. Toutefois, ces solutions sont techniquement complexes et difficiles à implémenter dans une montre-bracelet.

### Résumé de l'invention

La présente invention a pour but de fournir un dispositif portable, en particulier au poignet d'un utilisateur, incorporant un thermomètre permettant de fournir une mesure correcte de la température ambiante en s'affranchissant de la température du corps du porteur.

A cet effet, la présente invention a pour objet un dispositif portable incorporant un dispositif de mesure de température agencé pour mesurer la température ambiante, ce dispositif de mesure de température comprenant un capteur infrarouge ( capteur IR), un circuit de commande du capteur infrarouge et un circuit de traitement de signaux de mesure fournis par ce capteur infrarouge. Dans un mode de mesure de la température ambiante, le circuit de commande est agencé de manière à pouvoir activer plusieurs fois le capteur infrarouge, pour qu'il puisse fournir une pluralité de signaux de mesure au cours d'une certaine période de temps. Dans ce mode de mesure de la température ambiante, le circuit de traitement est agencé de manière à fournir des valeurs de température correspondant à au moins une partie de la pluralité de signaux de mesure et à effectuer une moyenne avec au moins une partie de ces valeurs de température pour obtenir une valeur de température moyenne qui est considérée comme représentative de la température ambiante.

L'invention est basée sur la constatation suivante des inventeurs : la température d'un espace intérieur correspond en général assez précisément à une moyenne des températures des surfaces délimitant cet espace et des objets situés dans cet espace. Ceci est plus particulièrement vrai lorsque cet espace est thermiquement dans un état stable depuis un certaine période étant donné l'inertie thermique des divers matériaux en présence. La présente invention utilise ainsi un capteur infrarouge permettant d'obtenir des mesures de température de la matière située dans l'environnement de l'utilisateur qui sont indépendantes de la température de l'utilisateur. Ce capteur infrarouge est incorporé dans un dispositif portable qui peut subir divers mouvements lorsqu'il est porté. Si le capteur n'est pas masqué, on peut ainsi obtenir sur une certaine période plusieurs mesures correspondant à diverses orientations du capteur infrarouge. La valeur moyenne de ces mesures correspond sensiblement à la température ambiante. Ensuite, les inventeurs ont observé que les mesures à l'extérieur ne donnaient souvent pas des résultats corrects en appliquant simplement cette méthode générale appropriée à un espace fermé. Pour l'extérieur, le mode de réalisation préféré mentionné ci-après apporte une solution efficace.

Selon un mode de réalisation préféré, le dispositif portable comprend un inclinomètre, lequel est agencé pour mesurer un angle entre une direction de référence terrestre et une direction d'orientation du capteur infrarouge. Dans le mode de mesure de la température ambiante, soit le circuit de commande est agencé pour activer le capteur infrarouge seulement lorsque la direction d'orientation est située dans un certain espace angulaire, soit le circuit de traitement est agencé pour écarter un signal de mesure reçu du capteur infrarouge lorsque la direction d'orientation de ce dernier est située hors de cet espace angulaire.

Dans une variante particulière, la direction de référence terrestre est un axe vertical et la direction d'orientation est définie par un vecteur normal à la surface active du capteur infrarouge. Ensuite, ledit espace angulaire est défini par un cône circulaire droit ayant cet axe vertical comme axe central et dont le sommet est situé en haut de ce cône. Ainsi, pour une mesure de température à l'extérieur, on stoppe les mesures de température ou on élimine ces mesures lorsque le capteur infrarouge est orienté en direction du ciel car le rayonnement infrarouge provenant du ciel donne en général une température très basse qui ne correspond nullement à la température ambiante. Grâce à l'inclinomètre, on peut sélectionner seulement des mesures de température correspondant à des orientations du capteur infrarouge vers des surfaces de l'environnement du dispositif portable.

L'invention concerne également une méthode de mesure de la température ambiante au moyen d'un capteur infrarouge incorporé dans un dispositif portable, cette méthode étant définie à la revendication 12.

D'autres caractéristiques particulières de l'invention font l'objet de revendications dépendantes et seront exposées ci-après dans la description détaillée de l'invention.

### Brève description des dessins

L'invention sera décrite ci-après à l'aide de dessins annexés, donnés à titre d'exemples nullement limitatifs, dans lesquels :
- La Figure 1 est une vue de dessus d'une montre-bracelet selon l'invention;
- La Figure 2 est une vue en coupe partielle de la Figure 1; et
- La Figure 3 est une vue de dessus d'un autre mode de réalisation d'une montre-bracelet selon l'invention.

### Description détaillée de l'invention

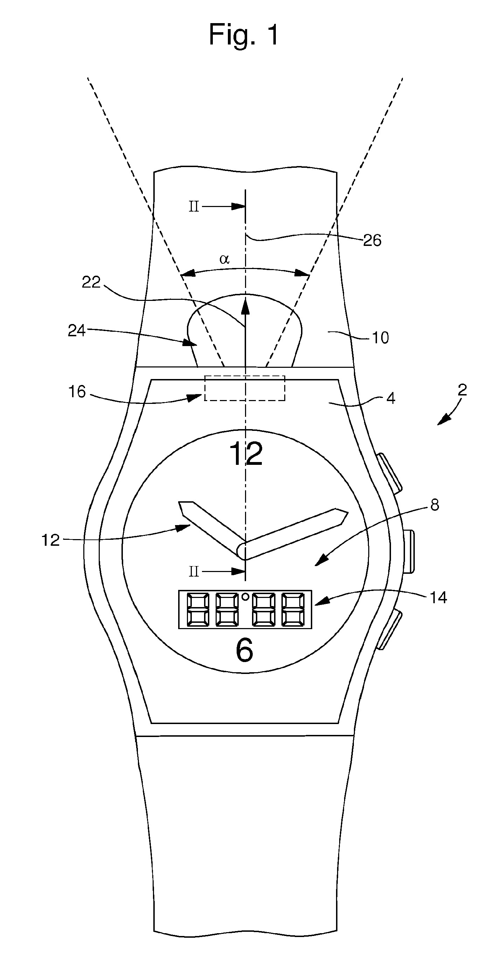

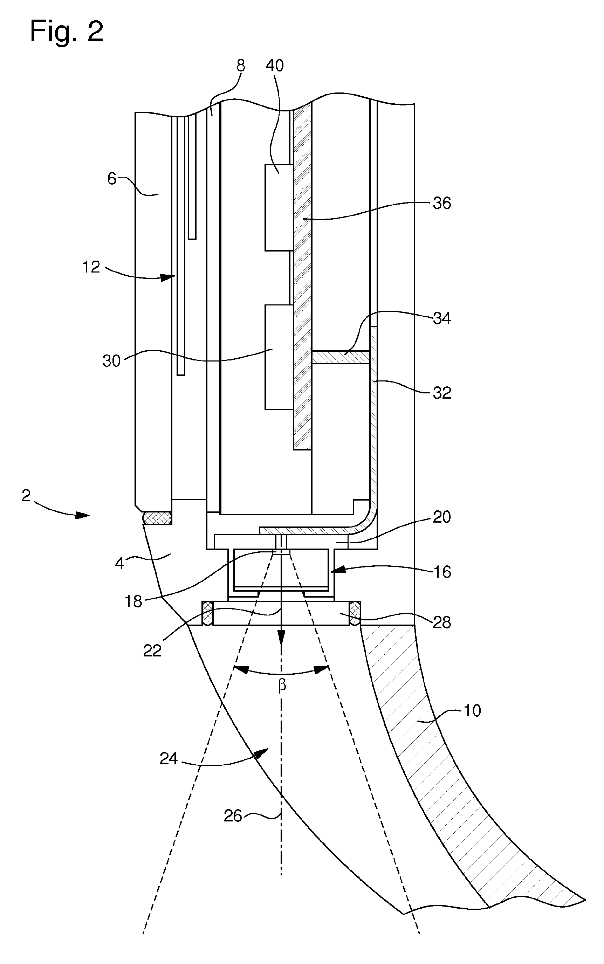

A l'aide des Figures 1 et 2 on décrira premièrement un mode de réalisation général d'un positif portable 2 selon l'invention incorporant un dispositif de mesure de température agencé pour mesurer la température ambiante. Ce dispositif portable est, dans l'exemple représenté aux figures, une montre-bracelet comprenant un boîtier 4, un verre 6, un cadran 8 et un bracelet 10. Il comprend aussi un affichage analogique 12 et un affichage digital 14. L'affichage digital est prévu notamment pour afficher une mesure de la température ambiante. Cependant, dans une variante, il est prévu d'utiliser l'affichage analogique pour indiquer la température ambiante en utilisant une des aiguilles comme indicateur et une échelle de température associée sur le cadran 8, de sorte que l'affichage digital n'est pas nécessaire à l'indication de la température ambiante.

Le dispositif de mesure de température comprend un capteur infrarouge 18 agencé dans une unité 16 de mesure du rayonnement infrarouge environnant. Cette unité est formée par une petite boîte 20 sur une paroi intérieure de laquelle le capteur infrarouge est agencé, la paroi en face de la surface active de ce capteur étant formée par une lame transparente au rayonnement infrarouge (rayonnement IR). La boîte 20 est logée dans un évidement latéral du boîtier 4. Plus particulièrement, dans la variante représentée aux Figures 1 et 2, l'évidement latéral du boîtier est prévu de manière que le capteur infrarouge 18 est agencé avec le vecteur normal 22 à sa surface active sensiblement situé dans un plan (correspondant au plan de coupe de la Figure 2) comprenant l'axe '6h-12h' 26 de la montre et perpendiculaire au plan général (plan du cadran 8) du boîtier 4. Le vecteur normal susmentionné est orienté dans le sens '12h' relativement au centre du boîtier et peut présenter un décalage angulaire relativement audit axe 26 qui est inférieur à trente degrés (30°) dans la direction angulaire s'éloignant du bracelet 10. Dans l'exemple de la Figure 2, il n'y a pas de décalage angulaire, et ainsi le vecteur normal est parallèle à l'axe 26. Etant donné que le capteur est prévu dans une région d'attache du bracelet au boîtier, il est prévu un évidement 24 au milieu du bracelet du côté du boîtier 4. De manière à garantir une fermeture étanche du boîtier 4 et une protection de l'unité de mesure 16, une plaquette de fermeture 28 est prévue du côté extérieur devant cette unité de mesure. Cette plaquette est montée de manière étanche, soit au moyen d'un joins classique, soit par une autre technique connue de l'homme du métier, par exemple par collage. Cette plaquette est prévue substantiellement transparente au rayonnement infrarouge. Par exemple, elle est constituée d'un cristal de Germanium qui a un aspect métallique et qui est donc essentiellement opaque dans le domaine visible.

On notera que la construction donnée aux figures est schématique et que l'homme du métier peut prévoir diverses variantes, notamment en modifiant le dispositif d'attache du bracelet au boîtier de montre et/ou en concevant un bracelet dont la configuration libère la région autour de la direction du vecteur normal 22. On remarquera qu'un décalage angulaire du vecteur normal 22 vers le haut, mentionné ci-avant, permet de diminuer la zone, occupée généralement par le bracelet, qu'il faut libérer pour permettre une réception du rayonnement infrarouge avec une relativement grande ouverture. Le positionnement du capteur 18 dans une région du boîtier 4 située dans le prolongement de la position '12h' du cadran est sélectionné pour permettre d'effectuer des mesures du rayonnement infrarouge dans des directions préférentielles lorsque la montre-bracelet 2 est portée au poignet d'un utilisateur. En effet, l'orientation du vecteur normal au capteur 18 permet dans la plupart des positions de l'avant-bras du porteur de la montre d'éviter de capter un rayonnement provenant de cette personne. Ensuite, dans une position assise du porteur, la direction d'orientation de ce capteur est généralement en-dessous d'un plan horizontal; ce qui permet d'effectuer automatiquement des mesures essentiellement orientées vers le bas et d'éviter à l'extérieur des mesures orientées vers le ciel, pour des raisons déjà exposées dans le résumé de l'invention. Ceci est aussi en partie vrai lorsque le porteur est debout, cette direction d'orientation étant majoritairement en-dessous d'un plan horizontal, bien que proche, et s'éloignant du corps du porteur. Cependant, en position assise, il est possible que la direction d'orientation pointe vers une jambe du porteur. Dans ce dernier cas, un filtre peut être prévu pour éliminer des mesures parasites, comme ceci sera exposé encore par la suite.

Le capteur infrarouge 18 est relié électriquement à une unité électronique 30 via un substrat souple 32 présentant des pistes électriques et un connecteur 34 reliant au moins une plage du substrat souple et à au moins une plage respective d'un circuit imprimé 36 sur lequel est agencé l'unité électronique 30. Cette unité électronique forme un circuit de commande du capteur infrarouge et un circuit de traitement de signaux de mesure fournis par ce capteur infrarouge. Dans un mode de mesure de la température ambiante, le circuit de commande est agencé de manière à pouvoir activer plusieurs fois le capteur infrarouge, pour que ce capteur puisse fournir une pluralité de signaux de mesure au cours d'une certaine période de temps. Ensuite, dans ce mode de mesure de la température ambiante, le circuit de traitement est agencé de manière à fournir des valeurs de température correspondant à au moins une partie de la pluralité de signaux de mesure et à effectuer une moyenne avec au moins une partie de ces valeurs de température pour obtenir une valeur de température moyenne qui est considérée comme représentative de la température ambiante.

On remarquera que le circuit de commande et le circuit de traitement peuvent dans une variante être formés par des circuits distincts spécifiques. On notera aussi qu'au moins une partie du circuit de commande et/ou du circuit de traitement peut être incorporée dans l'unité de mesure 16 et même dans le capteur infrarouge conçu spécifiquement pour la présente application. Divers niveaux d'intégration des circuits électroniques sont donc envisageables. De manière connue, un capteur de température est incorporé dans l'unité de mesure 16 pour augmenter la précision de la mesure du rayonnement infrarouge par le capteur 18, étant donné que le signal de mesure qu'il produit dépend de sa température.

Comme la température ambiante dans un espace sensiblement en équilibre thermique correspond assez précisément à une température moyenne des surfaces rayonnantes délimitant cet espace et des objets situés dans cet espace, il est prévu dans une variante d'agencer l'unité de mesure 16 et le capteur infrarouge 18 dans celle-ci pour que ce capteur reçoive, dans le mode de mesure de la température ambiante, un rayonnement infrarouge extérieur au dispositif portable sous une ouverture d'au moins vingt degrés (20°) au moins dans un plan géométrique donné. Ainsi, l'ouverture α dans le plan général du boîtier de montre et/ou l'ouverture β dans le plan transversal à ce plan général et comprenant l'axe 26 ont une valeur d'au moins 20°. Dans une autre variante préférée, cette ouverture a une valeur d'au moins trente-cinq degrés (35°) au moins dans un plan géométrique donné. On remarquera que les capteurs infrarouge utilisés pour mesurer la température d'un objet ont généralement une relativement petite ouverture de manière à recevoir le rayonnement infrarouge provenant seulement de cet objet. Au contraire, dans les variantes décrites ici, il est prévu une relativement grande ouverture de sorte que la température obtenue pour chaque mesure correspond déjà à une certaine moyenne des températures de diverses surfaces et/ou objets.

Dans une variante particulière, le circuit de traitement 30 comprend un filtre agencé pour éliminer certains signaux, parmi une pluralité de signaux de mesure fournis par le capteur infrarouge dans une période donnée, ou certaines valeurs parmi les valeurs de température correspondantes. Plus particulièrement, ce filtre élimine au moins des signaux de mesure ou des valeurs de température qui sont situés hors d'une plage déterminée. Dans une variante, cette plage est déterminée en fonction de mesures précédentes et notamment d'une moyenne de ces mesures précédentes et d'un écart-type prédéfini ou calculé. Ceci permet d'éliminer des mesures qui proviendraient par exemple d'une source de chaleur ou de certains matériaux accumulant fortement le rayonnement solaire, par exemple certains goudrons à l'extérieur par temps ensoleillé et sans vent.

Selon un mode de réalisation préféré, en particulier pour une mesure de température ambiante à l'extérieur, également décrit à l'aide de la Figure 2, le dispositif portable comprend un inclinomètre 40. Cet inclinomètre est agencé pour mesurer un angle entre une direction de référence terrestre et une direction d'orientation du capteur infrarouge. Dans le mode de mesure de la température ambiante, le circuit de commande du capteur infrarouge est agencé pour l'activer seulement lorsque cette direction d'orientation est située dans un certain espace angulaire. Alternativement, c'est le circuit de traitement des signaux de mesure qui est agencé pour écarter un signal de mesure reçu du capteur infrarouge lorsque la direction d'orientation est située hors d'un certain espace angulaire. Dans une variante préférée, la direction de référence terrestre est un axe vertical et la direction d'orientation susmentionnée est définie par le vecteur 22 normal à la surface active du capteur infrarouge 18. De plus, l'espace angulaire sélectionné est défini par un cône circulaire droit ayant cet axe vertical comme axe central et dont le sommet est situé en haut de ce cône ; c'est-à-dire qu'il ne s'agit pas d'un cône inversé.

Ce mode de réalisation préféré est très avantageux pour des mesures à l'extérieur, car il permet d'écarter des mesures avec le capteur orienté selon une direction au-dessus du plan horizontal, lesquelles ont une forte probabilité d'être totalement erronées car provenant du rayonnement céleste. Dans une variante, il est possible de définir un autre espace angulaire, notamment pour écarter des mesures qui pourraient être influencées par la température corporelle de l'utilisateur ou du porteur de la montre-bracelet 2. L'inclinomètre peut de manière connue être formé par un accéléromètre trois axes permettant de déterminer précisément la direction verticale et de donner ainsi l'orientation dans l'espace à trois dimensions pour tout axe de référence du dispositif portable, notamment de l'axe 26, puisque cet inclinomètre est solidaire du dispositif portable.

Dans une variante particulière, le dispositif portable comprend des moyens de pondération des valeurs de température déterminées par le circuit de traitement en fonction des directions d'orientation du capteur infrarouge mesurées par l'inclinomètre lors de mesures correspondantes du rayonnement infrarouge par ce capteur infrarouge. Dans ce cas, la moyenne définissant la température ambiante est une moyenne pondérée.

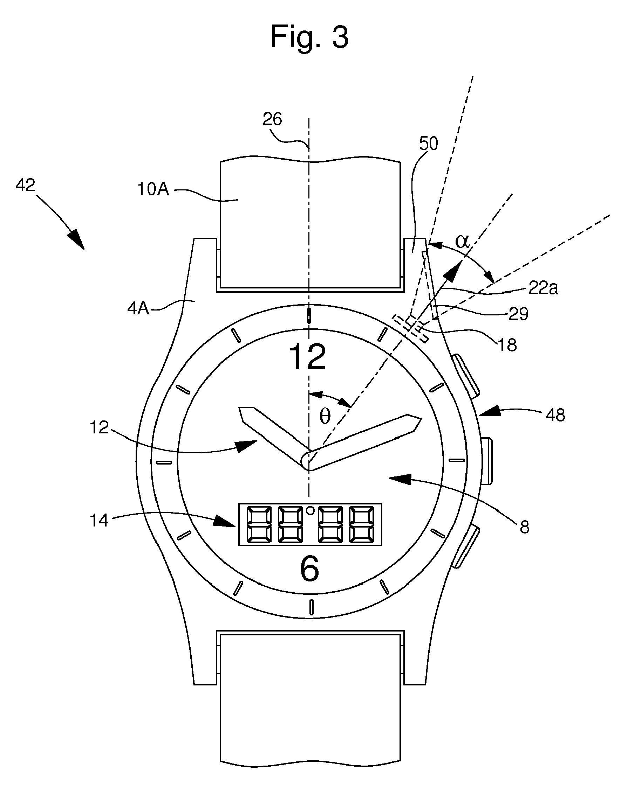

A la Figure 3 est montrée une vue de dessus d'un mode de réalisation particulier d'une montre-bracelet 42 selon l'invention. Le capteur infrarouge 18 est représenté dans cette vue de dessus pour la compréhension de son agencement dans le boîtier de montre 4A; mais il se trouve de fait à l'intérieur de ce boîtier. Les références déjà décrites ne seront pas à nouveau décrites ici. Cette montre-bracelet se distingue par un agencement particulier du capteur infrarouge 18 dans le boîtier 4A, à savoir que le vecteur normal 22A à sa surface active sort d'un côté latéral 48 du boîtier. Dans l'exemple représenté à la Figure 3, l'évidement latéral dans le boîtier pour l'agencement de l'unité de mesure du rayonnement infrarouge est prévu en partie dans une corne 50. Cette ouverture est fermée par une paroi latérale 29 formant une fenêtre substantiellement transparente pour les rayons IR. Dans une variante, le vecteur normal 22A présente un premier angle relativement au plan général du boîtier, dans le sens allant vers le dessus du boîtier (c'est-à-dire vers le haut en direction du verre de montre couvrant l'affichage 12), qui est inférieur à trente degrés (30°). Ensuite, un deuxième angle θ de ce vecteur normal relativement au plan perpendiculaire à ce plan général et comprenant l'axe '6h-12h' 26 est supérieur à vingt degrés (20°) et inférieur à soixante degrés (60°), dans le sens horaire. Un tel agencement est favorable car il permet premièrement d'équiper la montre d'un bracelet classique 10A avec une attache au boîtier formée d'une goupille entre deux cornes. Ensuite, cet agencement assure que la majeure partie des mesures effectuées par le capteur infrarouge, lorsque la montre est portée au poignet de cet utilisateur, correspondent à des directions d'orientation du capteur en dessous d'un plan horizontal, en particulier lorsque l'utilisateur est debout.

La présente invention concerne aussi une méthode de mesure de la température ambiante au moyen d'un capteur infrarouge incorporé dans un dispositif portable. Etant donné que cette méthode est mise en oeuvre en particulier par le dispositif portable selon l'invention, des caractéristiques de ce dispositif portable exposées précédemment sont prévues pour la mise en oeuvre de diverses variantes de la méthode selon l'invention. On évitera donc dans la description de cette méthode des répétions inutiles.

De manière générale, la méthode de mesure de la température ambiante au moyen d'un capteur infrarouge, incorporé dans un dispositif portable, est caractérisée en ce qu'elle comprend les étapes suivantes :
A) Effectuer plusieurs mesures du rayonnement infrarouge incident sur la surface active du capteur infrarouge au cours d'une certaine période de temps en bougeant le dispositif portable, le capteur infrarouge transmettant une pluralité de signaux de mesure à un circuit de traitement de ces signaux de mesure ;
B) Fournir au moyen du circuit de traitement des valeurs de température correspondant à au moins une partie de la pluralité de signaux de mesure ;
C) Effectuer une moyenne avec au moins une partie desdites valeurs de température pour obtenir une valeur de température moyenne, laquelle est considérée comme représentative de la température ambiante.

Dans un mode de mise en oeuvre préféré de la méthode de mesure de la température ambiante, il est prévu de mesurer à l'aide d'un inclinomètre, incorporé dans le dispositif portable, un angle entre une direction de référence terrestre et une direction d'orientation du capteur infrarouge lors de chaque mesure envisagée. En exploitant cette mesure d'angle, soit le circuit de commande du capteur infrarouge l'active seulement lorsque la direction d'orientation est située dans un certain espace angulaire, soit le circuit de traitement des signaux de mesure écarte un signal de mesure reçu du capteur infrarouge lorsque la direction d'orientation lors de la mesure correspondante est située hors de cet espace angulaire. Dans une variante préférée, la direction de référence terrestre est un axe vertical et la direction d'orientation du capteur infrarouge est définie par un vecteur normal à sa surface active. L'espace angulaire est défini par un cône circulaire droit ayant cet axe vertical comme axe central et dont le sommet est situé en haut de ce cône.

Selon une variante particulière, la méthode comprend une étape de pondération des valeurs de température en fonction d'angles mesurés par l'inclinomètre lors de mesures correspondantes par le capteur infrarouge.

Selon un mode de mise en oeuvre particulier, la méthode est caractérisée par le fait que le circuit de commande active le capteur infrarouge pour fournir un nouveau signal de mesure seulement lorsqu'il détermine que la direction d'orientation du capteur infrarouge a sensiblement varié relativement à une dernière mesure ou à des dernières mesures. Alternativement, le circuit de traitement des signaux de mesure effectue la moyenne prévue en sélectionnant des valeurs de température dont au moins une partie correspond à des directions d'orientation sensiblement différentes.

Selon un autre mode de mise en oeuvre particulier où il est prévu que le dispositif portable soit porté au poignet d'un utilisateur, lorsque la fonction de mesure de la température ambiante est active, la méthode de mesure de la température ambiante selon l'invention est répétée périodiquement de manière automatique. Ceci permet d'effectuer régulièrement une nouvelle mesure de la température ambiante sans que l'utilisateur du dispositif portable, en particulier de la montre-bracelet, ait à adopter un comportement spécifique. Ainsi l'affichage de la température ambiante est actualisé automatiquement et reste donc précise. Cet affichage peut être permanent et le mode de mesure de la température ambiante continu ou périodique. L'affichage de la température ambiante peut aussi être prévu sur demande. Grâce à ce dernier mode de mise en oeuvre, il est possible d'afficher rapidement une valeur correcte pour la température ambiante.

Si la présente invention trouve une application particulièrement favorable pour un dispositif portable au poignet d'un utilisateur, elle peut également être implémentée dans d'autres dispositifs, par exemple dans des téléphones portables ou des tablettes électroniques.

## Revendications

1. Dispositif portable (2; 42) incorporant un dispositif de mesure de température agencé pour mesurer la température ambiante, **caractérisé en ce que** le dispositif de mesure de température comprend un capteur infrarouge (18), un circuit de commande (30) du capteur infrarouge et un circuit de traitement (30) de signaux de mesure fournis par ce capteur infrarouge ; **en ce que**, dans un mode de mesure de la température ambiante, le circuit de commande est agencé de manière à pouvoir activer plusieurs fois le capteur infrarouge, pour qu'il puisse fournir une pluralité de signaux de mesure au cours d'une certaine période de temps ; et **en ce que**, dans ce mode de mesure de la température ambiante, le circuit de traitement est agencé de manière à fournir des valeurs de température correspondant à au moins une partie de ladite pluralité de signaux de mesure et à effectuer une moyenne avec au moins une partie de ces valeurs de température pour obtenir une valeur de température moyenne qui est considérée comme représentative de la température ambiante.

2. Dispositif portable selon la revendication 1, **caractérisé en ce que** ledit capteur infrarouge est agencé pour recevoir, dans ledit mode de mesure de la température ambiante, un rayonnement infrarouge extérieur à ce dispositif portable sous une ouverture d'au moins vingt degrés (20°) au moins dans un plan géométrique donné.

3. Dispositif portable selon la revendication 1, **caractérisé en ce que** ledit capteur infrarouge est agencé pour recevoir, dans ledit mode de mesure de la température ambiante, un rayonnement infrarouge extérieur à ce dispositif portable sous une ouverture d'au moins trente-cinq degrés (35°) au moins dans un plan géométrique donné.

4. Dispositif portable selon l'une quelconque des revendications précédentes, **caractérisé en ce que** ledit circuit de traitement comprend un filtre agencé pour éliminer certains signaux parmi ladite pluralité de signaux de mesure ou certaines valeurs parmi lesdites valeurs de température, ce filtre éliminant au moins des signaux de mesure ou des valeurs de température qui sont situés hors d'une plage déterminée.

5. Dispositif portable selon l'une quelconque des revendications précédentes, **caractérisé en ce qu'**il comprend un inclinomètre (40), lequel est agencé pour mesurer un angle entre une direction de référence terrestre et une direction d'orientation dudit capteur infrarouge ; et **en ce que**, dans ledit mode de mesure de la température ambiante, ledit circuit de commande est agencé pour activer le capteur infrarouge seulement lorsque ladite direction d'orientation est située dans un certain espace angulaire ; ou **en ce que**, dans ledit mode de mesure de la température ambiante, ledit circuit de traitement est agencé pour écarter un signal de mesure reçu du capteur infrarouge lorsque ladite direction d'orientation est située hors dudit espace angulaire.

6. Dispositif portable selon la revendication 5, **caractérisé en ce que** la direction de référence terrestre est un axe vertical et la direction d'orientation est définie par un vecteur normal (22; 22A) à la surface active du capteur infrarouge ; et **en ce que** ledit espace angulaire est défini par un cône circulaire droit ayant cet axe vertical comme axe central et dont le sommet est situé en haut de ce cône.

7. Dispositif portable selon la revendication 5 ou 6, **caractérisé en ce qu'**il comprend des moyens de pondération desdites valeurs de température en fonction d'angles mesurés par ledit inclinomètre lors de mesures correspondantes par le capteur infrarouge.

8. Dispositif portable selon l'une quelconque des revendications précédentes, **caractérisé en ce qu'**il est agencé pour être porté au poignet d'un utilisateur.

9. Dispositif portable (2) selon la revendication 8, **caractérisé en ce qu'**il forme une montre-bracelet, et **en ce que** ledit capteur infrarouge est agencé dans un boîtier (4) de cette montre-bracelet avec le vecteur normal (22) à sa surface active sensiblement situé dans un plan comprenant l'axe '6h-12h' (26) et perpendiculaire au plan général du boîtier, ledit vecteur normal étant orienté dans le sens '12h' relativement au centre du boîtier et présentant un décalage angulaire relativement audit axe '6h-12h' inférieur à trente degrés (30°).

10. Dispositif portable (42) selon la revendication 8, **caractérisé en ce qu'**il forme une montre-bracelet, et **en ce que** ledit capteur infrarouge est agencé dans un boîtier (4A) de cette montre-bracelet avec le vecteur normal à sa surface active sortant d'un des deux côtés latéraux du boîtier, ce vecteur normal présentant un premier angle relativement au plan général du boîtier qui est inférieur à trente degrés (30°) et un deuxième angle (θ) relativement au plan perpendiculaire à ce plan général et comprenant l'axe '6h-12h' (26), dans le sens horaire, qui est supérieur à vingt degrés (20°) et inférieur à soixante degrés (60°).

11. Dispositif portable selon la revendication 9 ou 10, **caractérisé en ce que** ledit capteur infrarouge est agencé dans un évidement latéral du boîtier, cet évidement latéral étant fermé du côté extérieur par une plaquette (28) ou une paroi (29) substantiellement transparente pour le rayonnement infrarouge.

12. Méthode de mesure de la température ambiante au moyen d'un capteur infrarouge incorporé dans un dispositif portable, **caractérisé en ce que** cette méthode comprend les étapes suivantes :
A) Effectuer plusieurs mesures du rayonnement infrarouge incident sur la surface active du capteur infrarouge au cours d'une certaine période de temps en bougeant le dispositif portable, le capteur infrarouge transmettant une pluralité de signaux de mesure à un circuit de traitement de ces signaux de mesure ;
B) Fournir au moyen dudit circuit de traitement des valeurs de température correspondant à au moins une partie de ladite pluralité de signaux de mesure ;
C) Effectuer une moyenne avec au moins une partie desdites valeurs de température pour obtenir une valeur de température moyenne, laquelle est considérée comme représentative de la température ambiante.

13. Méthode selon la revendication 12, **caractérisée en ce que** le capteur infrarouge est agencé pour recevoir un rayonnement infrarouge extérieur à ce dispositif portable sous une ouverture d'au moins vingt degrés (20°) au moins dans un plan géométrique donné.

14. Méthode selon la revendication 12, **caractérisée en ce que** le capteur infrarouge est agencé pour recevoir un rayonnement infrarouge extérieur à ce dispositif portable sous une ouverture d'au moins trente-cinq degrés (35°) au moins dans un plan géométrique donné.

15. Méthode selon l'une quelconque des revendications 12 à 14, **caractérisée en ce qu'**elle comprend en outre une étape d'élimination des signaux de mesure ou des valeurs de température qui sont situés hors d'une plage déterminée.

16. Méthode selon l'une quelconque des revendications 12 à 15, **caractérisée en ce qu'**il est prévu de mesurer à l'aide d'un inclinomètre, incorporé dans le dispositif portable, un angle entre une direction de référence terrestre et une direction d'orientation du capteur infrarouge; et **en ce qu'**un circuit de commande du capteur infrarouge l'active seulement lorsque la direction d'orientation est située dans un certain espace angulaire ou ledit circuit de traitement écarte un signal de mesure reçu du capteur infrarouge lorsque la direction d'orientation lors de la mesure correspondante est située hors de cet espace angulaire.

17. Méthode selon la revendication 16, **caractérisée en ce que** la direction de référence terrestre est un axe vertical et la direction d'orientation du capteur infrarouge est définie par un vecteur normal à sa surface active ; et **en ce que** ledit espace angulaire est défini par un cône circulaire droit ayant cet axe vertical comme axe central et dont le sommet est situé en haut de ce cône.

18. Méthode selon la revendication 16 ou 17, **caractérisée en ce qu'**elle comprend une étape de pondération desdites valeurs de température en fonction d'angles mesurés par ledit inclinomètre lors de mesures correspondantes par le capteur infrarouge.

19. Méthode selon l'une quelconque des revendications 16 à 18, **caractérisée en ce que** ledit circuit de commande active ledit capteur infrarouge pour fournir un nouveau signal de mesure seulement lorsqu'il détermine que la direction d'orientation du capteur infrarouge a sensiblement varié relativement à une dernière mesure ou à des dernières mesures ou ledit circuit de traitement effectue ladite moyenne en sélectionnant des valeurs de température dont au moins une partie correspond à des directions d'orientation sensiblement différentes.

20. Méthode selon l'une quelconque des revendications 12 à 19, **caractérisée en ce que** le dispositif portable est agencé pour être porté au poignet d'un utilisateur ; et **en ce que**, lorsque la fonction de mesure de la température ambiante est active, la méthode de mesure de la température ambiante selon l'une quelconques des revendications 12 à 19 est répétée périodiquement de manière automatique.
